# EUROPEAN PATENT APPLICATION

(11) **EP 3 133 479 A1**
(43) Date of publication of application: **22.02.2017**
(21) Application number: 14891308.0
(22) Date of filing: 22.08.2014
(51) Int. Cl.: G06F 3/0484, G06F 3/0488

(54) **ELEMENT DELETING METHOD AND APPARATUS BASED ON TOUCH SCREEN**

(30) Priority: 05.05.2014 CN 201410185430
(71) Applicant: ZTE Corporation, Shenzhen, Guangdong 518057 (CN)
(72) Inventor: GUO, Chaosheng, Shenzhen Guangdong 518057 (CN); YANG, Xin, Shenzhen Guangdong 518057 (CN); ZHU, Linke, Shenzhen Guangdong 518057 (CN)
(74) Representative: Regimbeau
(86) International application number: PCT/CN2014/085059
(87) International publication number: WO 2015/169010

(57) **Abstract**

Disclosed are an element deleting method and apparatus based on a touch screen, where the method includes: detecting a touch process of a user on the touch screen (S102); acquiring a sliding track of the user in the touch process on the touch screen after the touch process is ended (S104); confirming screen display elements passed by the sliding track (S106); and deleting the screen display elements (S108). According to the present invention, a problem that deleting operations are low in efficiency and poor in user experience in relevant technologies is solved, so that there is a good effect on promotion of user experience of the terminal.

## Description

### TECHNICAL FIELD

The present invention relates to the field of mobile communication, and particularly relates to an element deleting method and apparatus based on a touch screen.

### BACKGROUND

With the gradual increase of intelligent terminals, the conciseness of a terminal desktop and the convenience of an editing function are more and more importatnt, which directly influence the effect of user experience, thereby influencing the brand awareness and the brand loyalty of users. According to a traditional deleting method of a terminal device, deletion is completed depending on click confirmation and selecting-all confirmation or by dragging elements to be deleted to a specific zone, thereby influcing the conciseness of a deleting operation to a certain extent.

The deleting operation for the elements of the intelligent terminals in relevant technologies mostly aim to graphics and characters. For example, a starting point and an ending point are acquired by clicking the touch screen twice, characters between the starting point and the ending point in a text are detected and deleted, or, a graphic and image zone is erased by an eraser function in image processing software.

These technologies enrich text and graphic editing methods to a certain extent, but still have defects in convenince and accuracy.

An effective solution has not been proposed so far for a problem that deleting operations are low in efficiency and poor in user experience in relevant technologies.

### SUMMARY

Embodiments of the present invention provide an element deleting method and apparatus based on a touch screen, which are used for at least solving a problem that deleting operations are low in efficiency and poor in user experience in relevant technologies.

According to one embodiment of the present invention, the present invention provides an element deleting method based on a touch screen, where the method includes: detecting a touch process of a user on the touch screen; acquiring a sliding track of the user in the touch process on the touch screen after the touch process is ended; confirming screen display elements passed by the sliding track; and deleting the screen display elements.

The confirming screen display elements passed by the sliding track, includes: detecting how many times each screen display element has been covered by the sliding track; confirming that the screen display element is an element to be deleted if the screen display element is covered once; and confirming that the screen display element is an element not to be deleted if the screen display element is covered for more than one time.

The sliding track is a coordinate changing track of the sliding of the user on the touch screen, and/or a sliding track generated by a relative motion of display contents and touch points on the touch screen caused by continuous refreshing of the display contents on the touch screen.

The touch process is activated by at least one of following manners: long-time pressing on the touch screen, activation through a physical key, activation through a software button, activation through a gesture and activation through a sensor.

Screen display elements include at least one of the following: icons, documents, characters, controls, information, contact person entries and e-mail entries.

According to another embodiment of the present invention, the present invention further provides an element deleting apparatus based on a touch screen, where the apparatus includes a detection module, configured to detect a touch process of a user on the touch screen; a track acquisition module, configured to acquire a sliding track of the user in the touch process on the touch screen after the touch process is ended; an element confirmation module, configured to confirm screen display elements passed by the sliding track; and an element deleting module, configured to delete screen display elements.

The element confirmation module includes: a detection unit, configured to detect how many times each screen display element has been covered by the sliding track; and a first processing unit, configured to confirm that the screen display element is an element to be deleted if the screen display element is covered once, and comfirm that the screen display element is an element not to be deleted if the screen display element is covered for more than one time.

The siding track is a coordinate changing track of the sliding of the user on the touch screen, and/or a sliding track generated by a relative motion of display contents and touch points on the touch screen caused by continuous refreshing of the displaycontents on the touch screen.

The touch process is activated by at least one of following manners: long-time pressing on the touch screen, activation through a physical key, activation through a software button, activation through a gesture and activation through a sensor.

Screen display elements includeat least one of the following: icons, documents, characters, controls, information, contact person entries and e-mail entries.

Above all, embodiments of the present invention provide a convenient and quick element deleting method and apparatus based on the touch screen. Compared with the existing deleting method on an intelligent terminal, quickness is greatly improved, so that there is a good effect on promotion of user experience of the terminal. A problem that deleting operations are low in efficiency and poor in user experience in relevant technologies is solved; and, the element deleting method and apparatus can be widely applied to intelligent terminals with touch screens and other display devices, and has great promotional value and practical significance.

The above description is only the overview of the technical solution of the present invention; the technical solution can be implemented according to the contents of the description in order to understand the technical means of the present invention more clearly; and the specific implementation manners of the present invention are described below in order that the above and other purposes, features and advantages of the prevent invention can be understood more apparently and more easily.

### BRIEF DESCRIPTION OF DRAWINGS

Fig. 1 is a flow diagram illustrating an element deleting method based on a touch screen according to embodiments of the present invention;
Fig. 2 is a schematic diagram illustrating a deleting operation for document entries on an intelligent terminal according to embodiments of the present invention;
Fig. 3 is a schematic diagram illustrating an element deleting apparatus according to embodiments of the present invention;
Fig. 4 is a schematic diagram illustrating an element deleting apparatus according to embodiments of the present invention;
Fig. 5 is a schematic diagram illustrating a deleting operation for contact person entries on an intelligent terminal according to embodiments of the present invention;
Fig. 6 is a schematic diagram illustrating a deleting operation for desktop icons on an intelligent terminal according to embodiments of the present invention;
Fig. 7 is a schematic diagram illustrating another deleting operation for desktop icons on an intelligent terminal according to embodiments of the present invention; and
Fig. 8 is a schematic diagram illustrating a secondary-confirmation deleting operation for desktop icons on an intelligent terminal according to embodiments of the present invention.

### DETAILED DESCRIPTION

In order to solve a problem that deleting operations are low in efficiency and poor in user experience in the existing art, the present invention provides an element deleting method and apparatus based on a touch screen. The present invention is further illustrated in detail in combination with drawings and embodiments. It should be understood that specific embodiments described here are only used for explaining the present invention, rather than limiting the present invention.

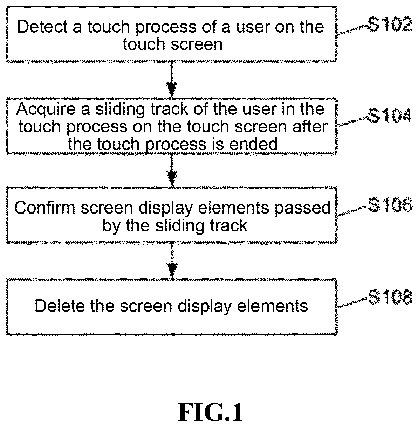

The present embodiment provides an element deleting method based on a touch screen, and the method can be realized at a terminal side; Fig. 1 is a flow diagram illustrating the element deleting method based on the touch screen according to embodiments of the present invention; and as shown in Fig. 1, the method includes following steps (S102-S108).

In S102, a touch process of a user on the touch screen is detected;
in S104, a sliding track of the user in the touch process on the touch screen is acquired after the touch process is ended;
in S106, screen display elements passed by the sliding track are confirmed; and
in S108, the screen display elements are deleted.

The present embodiment provides a convenient and quick element deleting method based on the touch screen. Compared with the existing deleting method on an intelligent terminal, quickness is greatly improved, so that there is a good effect on promotion of user experience of the terminal. A problem that deleting operations are low in efficiency and poor in user experience in relevant technologies is solved; and, the element deleting method can be widely applied to intelligent terminals with touch screens and other display devices, and has great promotional value and practical significance.

Optionally, elements deleted in the present method are screen display elements, including but not limited to: icons, documents, characters, controls and other display entries, such as contact person entries, information and e-mail entries, displayed on the screen. Based on this, the present embodiment provides a preferred implementation manner, namely, screen display elements include at least one of the following: icons, documents, characters, controls, information, contact person entries and e-mail entries.

Optionally, the sliding track in the present method may be a change of a touch coordinate on the touch screen, or may be a sliding track generated by a relative motion of display contents and touch points on the touch screen caused by continuous refreshing of the display contents under a condition that the touch coordinate is not changed. Based on this, the present embodiment provides a preferred embodiment, namely, the sliding track is a coordinate changing track of sliding of the user on the touch screen, and/or a sliding track generated by a relative motion of the display contents and the touch points on the touch screen caused by continuous refreshing of the display contents on the touch screen.

Optionally, according to the present method, selected elements passed by the sliding track can be secondarily confirmed before the touch is ended; the elements are not deleted if the elements are passed by the sliding track for many times after the sliding track is ended; otherwise, the elements are deleted. Based on this, the present embodiment provides a preferred implementation manner, namely, a manner of confirming screen display elements passed by the sliding track, which includes: detecting how many times each screen display element has been covered by the sliding track; the screen display element is confirmed to be an element to be deleted if the screen display element is covered once; and the screen display element is confirmed not to be an element to be deleted if the screen display element is covered for more than one time.

Optionally, the element deleting operation in the present embodiment may be activated by a certain apparatus or method, such as long-time pressing on the screen, activation through a physical key, activation through a software button, activation through a gesture or sensor. Based on this, the present embodiment provides a preferred implementation manner, namely, the touch process in the present embodiment may be activated by at least one of following manners: long-time pressing on the screen, activation through the physical key, activation through the software button, activation through the gesture and activation through the sensor. Therefore, the sliding operation of the user on the touch screen can be distinguished to be in a normal service state or in a to-delete-element state, thereby further facilitating user experience.

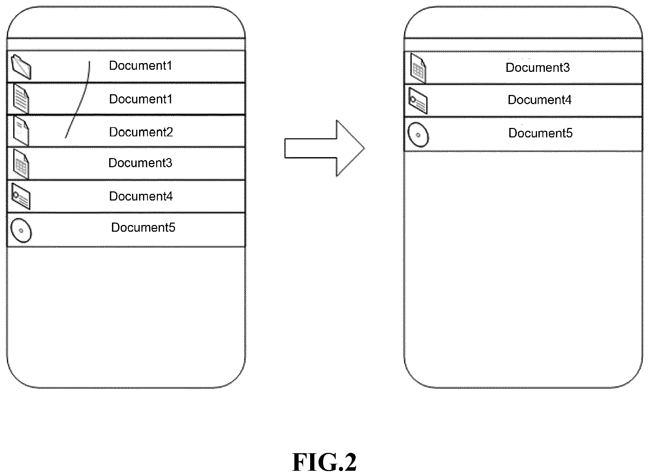

For implementation processes of the present invention, a deleting method of document entries on the intelligent terminal is taken as an example for illustration. Fig. 2 is a schematic diagram illustrating a deleting operation for the document entries on the intelligent terminal according to embodiments of the present invention; and as shown in Fig. 2, the operation includes following steps.

In Step 1, a touch of a user with a touch screen is detected;
in step 2, a detection is ended when the touch with the touch screen is ended;
in step 3, a sliding track in a process of touching the touch screen is recorded;
in step 4, screen display elements, such as a document 1, another document 1 and a document 2 shown in Fig. 1, passed by the sliding track are detected according to the sliding track; and
in step 5, the above screened display elements are deleted. A document 3, a document 4 and a document 5 are only left to be displayed on the touch screen after the deleting operation is executed.

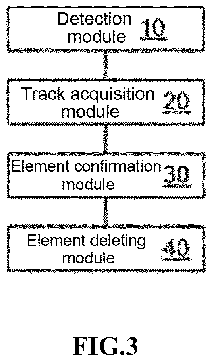

Corresponding to the element deleting method based on the touch screen introduced by the above embodiments, the present embodiment provides an element deleting apparatus based on the touch screen, and the apparatus may be arranged at a terminal side and used for realizing the above embodiments. Fig. 3 is a schematic diagram illustrating the element deleting apparatus according to embodiments of the present invention; and as shown in Fig. 3, the apparatus includes: a detection module 10, a track acquisition module 20, an element confirmation module 30 and an element deleting module 40. The structure is introduced in detail below.

The detection module 10 is configured to detect a touch process of a user on the touch screen;
the track acquisition module 20 is configured to acquire a sliding track of the user in the touch process on the touch screen after the touch process is ended;
the element confirmation module 30 is configured to confirm screen display elements passed by the sliding track; and
the element deleting module 40 is configured to delete screen display elements.

The present embodiment provides a convenient and quick element deleting apparatus based on the touch screen. Compared with the existing deleting apparatus on the intelligent terminal, quickness is greatly improved, so that there is a good effect on promotion of user experience of the terminal. A problem that deleting operations are low in efficiency and poor in user experience in relevant technologies is solved; and, the element deleting apparatus can be widely applied to intelligent terminals with touch screens and other display devices, and has great promotional value and practical significance.

Optimally, the element confirmation module 30 may include: a detection unit, configured to detect how many times each screen display element has been covered by the sliding track; and a first processing unit, configured to confirm that the screen display element is an element to be deleted if the screen display element is covered once, or confirm that the screen display element is an element not to be deleted if the screen display element is covered for more than one time.

In the present embodiment, the sliding track may be: a coordinate changing track of the sliding of the user on the touch screen, and/or a sliding track generated by a relative motion of display contents and touch points on the touch screen caused by continuous refreshing of the display contents on the touch screen. Screen display elements include at least one of the following: icons, documents, characters, controls, information, contact person entries and e-mail entries.

In the present embodiment, the touch process may be activated by at least one of following manners: long-time pressing on the screen, activation through the physical key, activation through the software button, activation through the gesture and activation through the sensor.

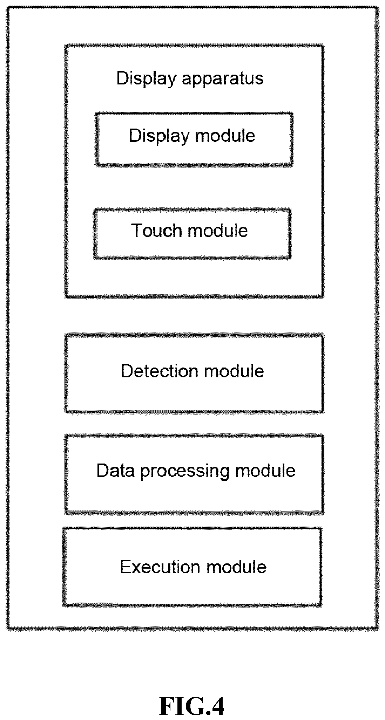

Based on the above apparatus, the present embodiment further provides an element deleting apparatus below, as shown in Fig. 4 which is a schematic diagram illustrating the element deleting apparatus; and the appartus includes a display apparatus and an element deleting apparatus, where
the display apparatus includes:
a display module, configured to display screen display elements on a touch screen; and
a touch module, configured to receive a touch operation of a user.

The element deleting apparatus includes:
a detection module, configured to detect the touch on the touch screen and record a sliding track of the touch on the touch screen;
a data processing module, configured to complete two aspects of work including: 1, judging screen display elements (such as controls, icons, entries, documents, characters) passed by the sliding track are according to information of the sliding track acquired by the detection module and parameters such as positions, shapes, visual areas of screen display elements; and 2, screening out elements to be deleted and reserved elements from screen elements passed by the track according a certain distinguishing rule; and
an execution module, configured to delete the elements to be deleted in a analysis result of the data processing module.

Above all, the technical solution of the present invention can be widely applied to intelligent terminals with touch screens and other display devices, can greatly improve efficiency and user experience of deleting operations and has great promotional value and practical significance.

Technical solutions of the present invention are introduced below through specific embodiments.

### Embodiment I

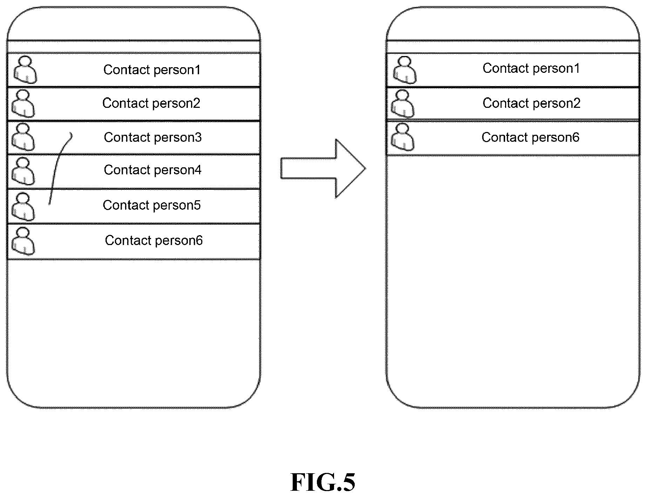

The present embodiment takes Fig. 5 as an example, to illustrate a method of deleting contact person entries on a touch screen in the present invention. Fig. 5 is a schematic diagram illustrating a deleting operation for contact person entries on an intelligent terminal according to embodiments of the present invention; as shown in Fig. 5, the flow includes following steps.

In step 1, a first touch with the touch screen is acquired, and a sliding track of the touch is started to be recorded;
in step 2, the sliding track passes contact person entries to be deleted by sliding on the screen, where the contact person entries passed by the sliding track may be icons and information of the contact person entries or other instruction controls of the contact person entries;
in step 3, the touch with the touch screen is ended, a detection module is triggered to transfer information of the sliding track to a data processing module for processing, or the data processing module initiatively acquires information of the sliding track from the detection module;
in step 4, the data processing module carries out operation according to the acquired information of the track and position information of contact persons, so as to judge which desktop icons would be deleted;
in step 5, an execution module executes a deleting action according to an operating result of the data processing module; and
in step 6, display is refreshed.

Optimally, when entries to be deleted exceed a current display area of the screen, the display can be refreshed and entries passed by the track are extended through holding touch in the display area of entries. For example, only 10 pieces of contact person information can be displayed in the current display area; when part of contact persons required to be deleted cannot be displayed unless the screen is slided, the touch can be held below the display area of the touch screen in the sliding process without interrupting the sliding track, so that the display is refreshed downwards one by one on the screen; and in this case, the sliding track mentioned in the present invention is a collection of a track generated by reserving the original sliding process and a track generated by a relative motion of touch points of the touch screen and the display contents.

### Embodiment II

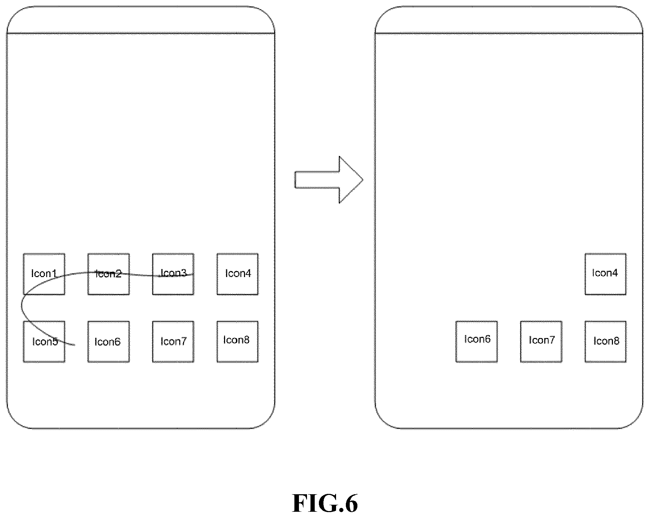

The present embodiment takes desktop icons as an example to illustrate an element deleting method of desktop icons on a touch screen device in the present invention. Fig. 6 is a schematic diagram illustrating a deleting operation for desktop icons on an intelligent terminal according to embodiments of the present invention; as shown in Fig. 6, the flow includes following steps.

In step 1, a first touch with the touch screen is acquired, and a sliding track of the touch is started to be recorded;
in step 2, the sliding track passes desktop icons to be deleted by sliding on the screen;
in step 3, the touch with the touch screen is ended, a detection module is triggered to transfer information of the sliding track to a data processing module for processing, or the data processing module initiatively acquires information of the sliding track from the detection module;
in step 4, the data processing module carries out operation according to the acquired information of the track and position information of desktop icons, so as to judge which desktop icons would be deleted;
in step 5, an execution module executes a deleting action according to an operating result of the data processing module; and
in step 6, display is refreshed.

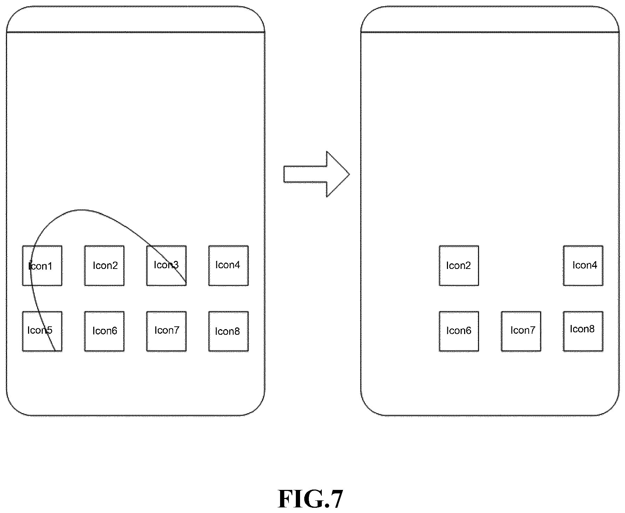

Fig. 7 is a schematic diagram illustrating another deleting operation for desktop icons on an intelligent terminal according to embodiments of the present invention, and the flow of the deleting operation in Fig. 7 is similar to that in Fig. 6 except for the sliding track.

### Embodiment III

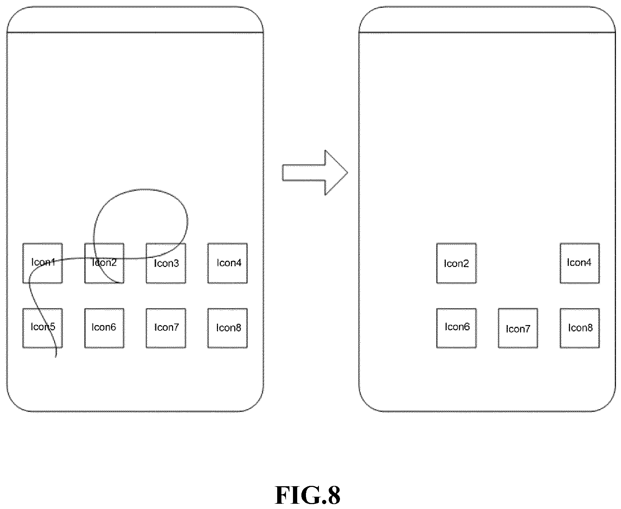

The present embodiment takes desktop icons as an example to illustrate an element deleting method with secondary confirmation of desktop icons on a touch screen device in the present invention. Fig. 8 is a schematic diagram illustrating a secondary-confirmation deleting operation for desktop icons on an intelligent terminal according to embodiments of the present invention; as shown in Fig. 8, the flow includes following steps.

In step 1, a first touch with a touch screen is acquired, and a sliding track of the touch is started to be recorded;
in step 2, the sliding track passes desktop icons to be deleted by sliding on the screen;
in step 3, the sliding track passes the icons been passed due to misoperation in step 2 again before the touch is ended;
in step 4, the touch with the touch screen is ended, a detection module is triggered to transfer information of the sliding track to a data processing module for processing, or the data processing module initiatively acquires information of the sliding track from the detection module;
in step 5, the data processing module carries out operation according to the acquired information of the track and position information of desktop icons, so as to judge that desktop icons passed by the sliding track for one time would be deleted;
in step 6, an execution module executes a deleting action according to an operating result of the data processing module; and
in step 7, display is refreshed.

Above all, the present invention provides a convenient and quick element deleting method and apparatus based on the touch screen. Compared with the existing deleting method on the intelligent terminal, quickness is greatly improved, so that there is a good effect on promotion of user experience of the terminal. A problem that deleting operations are low in efficiency and poor in user experience in relevant technologies is solved; and, the element deleting method and apparatus can be widely applied to intelligent terminals with touch screens and other display devices, and have great promotional value and practical significance.

In spite of an exemplary purpose, preferred embodiments of the present invention have been disclosed; those skilled in the art shall realize that a variety of improvements, additions and replacements are also possible, and thus, the scope of the present invention is not limited by the above embodiments.

### Industrial Applicability

As described above, the element deleting method and apparatus based on the touch screen provided by embodiments of the present invention have following beneficial effects that: the element deleting method and apparatus can be widely applied to intelligent terminals with touch screens and other display devices; and have great promotional value and practical significance.

## Claims

1. An element deleting method based on a touch screen, comprising:
detecting a touch process of a user on the touch screen;
acquiring a sliding track of the user in the touch process on the touch screen after the touch process is ended;
confirming screen display elements passed by the sliding track; and
deleting the screen display elements.

2. The method according to claim 1, wherein the confirming screen display elements passed by the sliding track, comprises:
detecting how many times each screen display element has been covered by the sliding track;
confirming that the screen display element is an element to be deleted if the screen display element is covered once; and
confirming that the screen display element is an element not to be deleted if the screen display element is covered for more than one time.

3. The method according to claim 1 or 2, wherein the sliding track is:
a coordinate changing track of the sliding of the user on the touch screen; and/or,
a sliding track generated by a relative motion of display contents and touch points on the touch screen caused by continuous refreshing of the display contents on the touch screen.

4. The method according to claim 1, wherein the touch process is activated by at least one of following manners:
long-time pressing on the touch screen, activation through a physical key, activation through a software button, activation through a gesture and activation through a sensor.

5. The method according to claim 1 or 2, wherein the screen display elements comprise at least one of the following:
icons, documents, characters, controls, information, contact person entries and e-mail entries.

6. An element deleting apparatus based on a touch screen, comprising:
a detection module, configured to detect a touch process of a user on the touch screen;
a track acquision module, configured to acquire a sliding track of the user in the touch process on the touch screen after the touch process is ended;
an element confirmation module, configured to confirm screen display elements passed by the sliding track; and
an element deleting module, configured to delete the screen display elements.

7. The appartus according to claim 6, wherein the element confirmation module comprises:
a detection unit, configured to detect how many times each screen display element has been covered by the sliding track; and
a first processing unit, configured to confirm that the screen display element is an element to be deleted if the screen display element is covered once; and
comfirm that the screen display element is an element not to be deleted if the screen display element is covered for more than one time.

8. The appartus according to claim 6 or 7, wherein the sliding track is:
a coordinate changing track of the sliding of the user on the touch screen; and/or,
a sliding track generated by a relative motion of display contents and touch points on the touch screen caused by continuous refreshing of the display contents on the touch screen.

9. The appartus according to claim 6, wherein the touch process is activated by at least one of following manners:
long-time pressing on the touch screen, activation through a physical key, activation through a software button, activation through a gesture and activation through a sensor.

10. The appartus according to claim 6 or 7, whereinthe screen display elements comprise at least one of the following:
icons, documents, characters, controls, information, contact person entries and e-mail entries.
